# EUROPEAN PATENT APPLICATION

(11) **EP 4 471 518 A1**
(43) Date of publication of application: **04.12.2024**
(21) Application number: 22922134.6
(22) Date of filing: 14.12.2022
(51) Int. Cl.: G05B 19/409, B23Q 17/00, G05G 5/03, G05G 5/05

(54) **OPERATING APPARATUS AND METHOD FOR CONTROLLING OPERATING APPARATUS**

(30) Priority: 24.01.2022 JP 2022008934
(71) Applicant: Murata Machinery, Ltd., Kyoto-shi, Kyoto 601-8326 (JP)
(72) Inventor: MURASE, Nobuhiro, Inuyama-shi, Aichi 484-8502 (JP); MAKITA, Kyosuke, Inuyama-shi, Aichi 484-8502 (JP)
(74) Representative: Weickmann & Weickmann PartmbB
(86) International application number: PCT/JP2022/045973
(87) International publication number: WO 2023/139983

(57) **Abstract**

[Problem] To realize in a simple manner a rotary switch that is appropriate for operating an element of an industrial machine.

[Means to Solve Problem] Provided is an operating apparatus 100 provided with a rotary switch 20 to drive an element 201 of an industrial machine S, the operating apparatus 100 comprising: a rotation driving device 30 that rotates the rotary switch 20; a brake device 40 that applies a load to or restricts rotation of the rotary switch 20; a setter (touch panel 10) that sets a first mode in which a rotation range of the rotary switch 20 is defined, or a second mode in which a rotation range of the rotary switch 20 is not defined; and a controller 50 that controls the rotation driving device 30 and the brake device 40 in accordance with the first mode or the second mode set by the setter (touch panel 10), wherein the controller 50, in the first mode, controls at least one of the rotation driving device 30 and the brake device 40 so as to restrict the rotation of the rotary switch 20 beyond the rotation range.

## Description

### Technical Field

The present invention relates to an operating apparatus and a method for controlling an operating apparatus.

### Background Art

An operating apparatus is used when an operator manually operates each element that constitutes an industrial machine. The operating apparatus includes a rotary switch (handle) that is gripped and operated by the operator. A configuration of such an operating apparatus has been proposed in which a magnification of the driving amount of an element relative to the operating amount of the rotary switch is set, and the feel of notches (feel of clicks) of the rotary switch is changed according to the magnification (see Patent Literature 1).

### Citation List

### Patent Literature

[Patent Literature 1] Japanese Unexamined Patent Application, First Publication No. 2016-062309

### Summary of Invention

### Technical Problem

In order to manually operate an element of an industrial machine, it is preferable to use a switch suitable for operating the element. If simply the feel of notches of the rotary switch is changed according to the magnification of the driving amount of the element as in the operating apparatus of Patent Literature 1, the operator may rotate the rotary switch excessively in some cases because the rotation range of the rotary switch is not restricted, and this leads to a risk of performing excessive setting for the element. Also, in order to individually operate a plurality of elements using the operating apparatus of Patent Literature 1, a switch is required for each element, and this leads to the issue of increased space needed for arranging switches in the operating apparatus. Furthermore, replacing some or all of the elements necessitates replacing the switches that correspond to the new elements, resulting in low versatility.

An object of the present invention is to provide an operating apparatus and a method for controlling an operating apparatus capable of realizing in a simple manner a rotary switch that is appropriate for operating an element of an industrial machine.

### Means for Solving the Problem

An operating apparatus according to an aspect of the present invention is an operating apparatus provided with a rotary switch to drive an element of an industrial machine, the operating apparatus comprising: a rotation driving device that rotates the rotary switch; a brake device that applies a load to or restricts rotation of the rotary switch; a setter that sets a first mode in which a rotation range of the rotary switch is defined, or a second mode in which a rotation range of the rotary switch is not defined; and a controller that controls the rotation driving device and the brake device in accordance with the first mode or the second mode set by the setter, wherein the controller, in the first mode, controls at least one of the rotation driving device and the brake device so as to restrict the rotation of the rotary switch beyond the rotation range.

A method for controlling an operating apparatus according to an aspect of the present invention is a method for controlling an operating apparatus provided with a rotary switch to drive an element of an industrial machine, the operating apparatus including a rotation driving device that rotates the rotary switch, and a brake device that applies a load to or restricts rotation of the rotary switch, the method comprising: setting a first mode in which a rotation range of the rotary switch is defined, or a second mode in which a rotation range of the rotary switch is not defined; and controlling, when the first mode is set, at least one of the rotation driving device and the brake device so as to restrict the rotation of the rotary switch beyond the rotation range.

### Advantageous Effects of the Invention

According to the operating apparatus and the method for controlling an operating apparatus of the above aspect, when the first mode is set, the rotation range of the rotary switch is defined by at least one of the rotation driving device and the brake device. Therefore, in the first mode, the operator cannot rotate the rotary switch beyond the rotation range, thus preventing excessive setting from being performed for the element. When selecting and operating one of a plurality of elements, by setting the first mode or the second mode, it is possible to easily realize a rotary switch suitable for each element. Furthermore, by switching the modes, a plurality of elements can be operated with a single rotary switch, thus reducing the space required for arranging switches in the operating apparatus. Also, even in a case where some or all of the elements are replaced, such a case can be dealt with by changing the settings of the first mode or the second mode, thus eliminating the need for component replacement while enhancing versatility.

In the operating apparatus of the above aspect, when the rotary switch is rotated, the controller may control at least one of the rotation driving device and the brake device so as to apply a load to the rotation of the rotary switch every time a predetermined angle is reached. According to such an aspect, notches are felt at predetermined angles when rotating the rotary switch, and therefore, the operator can readily perceive the rotation amount of the rotary switch. In the operating apparatus of the above aspect, in the first mode, where one end of the rotation range serves as an origin, when the rotary switch is rotated from an origin toward an other end, the controller may control at least one of the rotation driving device and the brake device so as to apply a load to the rotation of the rotary switch within a predetermined rotation range from the midway position of rotation to the other end. According to such an aspect, when the operator rotates the rotary switch from the origin, the rotation of the rotary switch becomes heavier in a predetermined rotation range near the end of the rotation range, and this enables the operator to readily perceive that the end of the rotation range is nearing.

In the operating apparatus of the above aspect, in the first mode, where an intermediate part of the rotation range serves as an origin, when the rotary switch is rotated from the origin, the controller may control the rotation driving device so as to return the rotary switch to the origin. According to such an aspect, upon releasing the rotary switch after rotating it from the origin, the rotary switch returns to the origin, thus preventing the rotary switch from remaining in the rotated state. In the operating apparatus of the above aspect, when the rotary switch is rotated from the origin, the controller may control at least one of the rotation driving device and the brake device so as to apply a load to the rotation of the rotary switch within both a predetermined rotation range from the midway position of rotation to one end of the rotation range, and a predetermined rotation range from the midway position of rotation to the other end of the rotation range. According to such an aspect, when the operator rotates the rotary switch from the origin, the rotation of the rotary switch becomes heavier in a predetermined rotation range near both ends of the rotation range, and this enables the operator to readily perceive that the end of the rotation range is nearing.

In the operating apparatus of the above aspect, a display that displays a button to switch between the first mode and the second mode may be included, and the setter may change setting from the first mode to the second mode, or from the second mode to the first mode, on the basis of an input made by pressing the button displayed on the display. According to such an aspect, pressing the button displayed on the display enables easy switching to the first mode or to the second mode. In the operating apparatus of the above aspect, at least one of the first mode and the second mode may be set in a plurality of modes, and the button may be able to set one of the plurality of first modes or the plurality of second modes. According to such an aspect, pressing the button enables easy setting of one of the plurality of first modes or the plurality of second modes. In the operating apparatus of the above aspect, the display may graphically display a rotation amount or a rotational position of the rotary switch, using a figure, and the controller may cause the display to display a length or a position of the figure while varying it according to the rotation amount or the rotational position of the rotary switch. According to such an aspect, the rotation amount or the rotational position of the rotary switch is displayed on the display while varying the length or position of a figure, and therefore, the operator can readily perceive the rotation amount or the rotational position of the rotary switch. In the operating apparatus of the above aspect, when displaying a plurality of the elements on the display, the controller may cause the display to display a plurality of panels corresponding to the plurality of elements, and as one of the plurality of panels is selected, the setter may set the first mode or the second mode that is preliminarily defined for each of the plurality of elements. According to such an aspect, when there are a plurality of elements, simply selecting a panel sets the first mode or the second mode with a predetermined content, thus reducing the workload for the operator.

### Brief Description of the Drawings

Fig. 1 is a diagram showing an example of an industrial machine.
Fig. 2 is a diagram showing an example of an operating apparatus according to an embodiment.
Fig. 3 is a diagram showing a state in which a selection is to be made from panels displayed on a display.
Fig. 4 is a diagram showing a state in which a panel is selected.
Fig. 5 shows diagrams illustrating a first mode in which Fig. 5 (A) is a diagram showing figures displayed on a display, and Fig. 5 (B) is a diagram for describing a rotary switch.
Fig. 6 (A), Fig. 6 (B), and Fig. 6 (C) are diagrams showing examples of feels of notches in the rotary switch.
Fig. 7 is a diagram showing a state in which a second mode is set.
Fig. 8 shows diagrams illustrating the second mode in which Fig. 8 (A) is a diagram showing a panel displayed on the display, and Fig. 8 (B) is a diagram for describing the rotary switch.
Fig. 9 is a diagram showing a state in which another first mode is set.
Fig. 10 shows diagrams illustrating the another first mode in which Fig. 10 (A) is a diagram showing figures displayed on the display, and Fig. 10 (B) is a diagram for describing the rotary switch.
Fig. 11 is a flowchart showing an example of a method for controlling an operating apparatus according to the embodiment.
Fig. 12 is a flowchart showing another example of the method for controlling an operating apparatus.

### Description of Embodiments

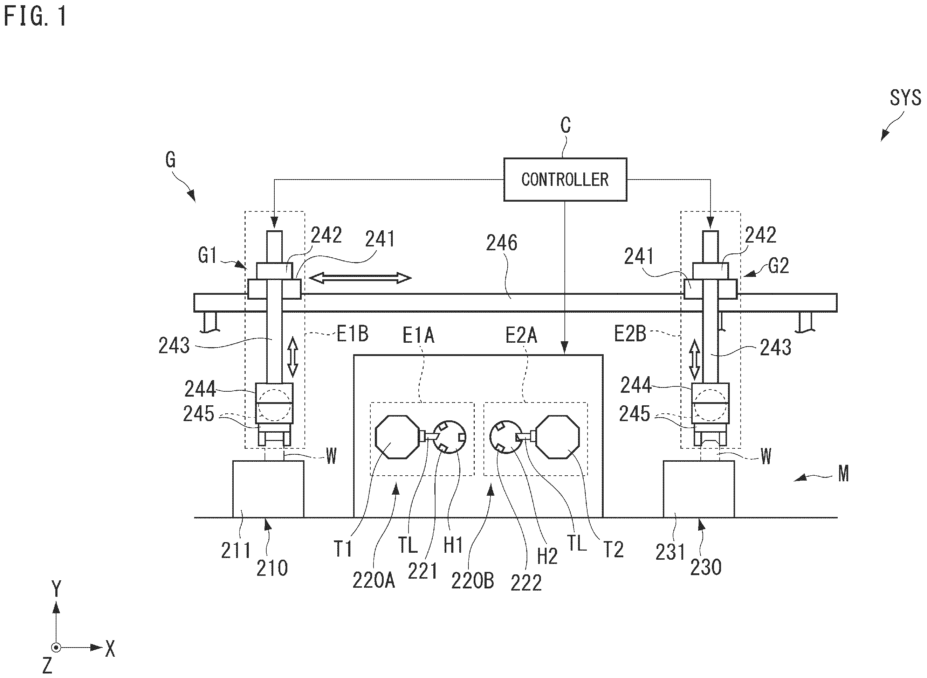

The following describes an embodiment of the present invention, with reference to the drawings. However, the present invention is not limited to the contents described below. In the drawings, scale is changed as necessary to illustrate the embodiments, such as by enlarging or emphasizing a portion, and the shapes and dimensions in the drawings may differ from those of the actual product. In Fig. 1, an XYZ coordinate system is used to describe directions in the figure. For each of the X direction, the Y direction, and the Z direction, description is made with a definition in which a direction indicated by an arrow is the positive (+) direction and a direction opposite to the direction indicated by the arrow is the negative (-) direction.

First, an industrial machine S operated by an operating apparatus 100 according to the embodiment will be described. Fig. 1 is a diagram showing an example of the industrial machine S. Fig. 1 shows a machine tool system SYS, which is an industrial machine S, including a lathe M, and a loader device G. As shown in Fig. 1, the machine tool system SYS includes a controller C that controls the lathe M and the loader device G. The lathe M is a parallel twin spindle lathe. In the present embodiment, a parallel twin spindle lathe is taken as an example of the lathe M, however, an opposed twin spindle lathe may be used instead. The lathe M includes a loading platform 210, two processors, a first processor 220A and a second processor 220B, and an unloading platform 230. The loading platform 210 has a placement table 211 for placing thereon a workpiece W to be machine processed. An unmachined workpiece W is placed on the placement table 211. The placement table 211 is configured so as to be able to transfer an unmachined workpiece W to the loader device G.

The first processor 220A and the second processor 220B each process a workpiece W using tools TL. The first processor 220A has a main spindle H1 and a turret T1. The second processor 220B has a main spindle H2 and a turret T2. The main spindles H1, H2 are arranged side by side in the X direction, and are each supported by a bearing or the like not shown in the drawings so as to be able to rotate around an axial line parallel to the Z direction. Chucks 221, 222 are provided at +Z side ends of the main spindles H1, H2, respectively. The chucks 221, 222 are opened and closed by a chuck driver not shown in the drawings to grip or release the workpiece W.

The turrets T1, T2 are arranged away from the axial direction of the main spindles H1, H2. The turret T1 is arranged on the -X side of the main spindle H1, and the turret T2 is arranged on the +X side of the main spindle H2. Each of the turrets T1, T2 can be rotated around an axis parallel to the Z direction by a rotation driver not shown in the drawings. A plurality of holders for holding tools TL are provided on the circumferential surfaces of the turrets T1, T2, and tools TL are held in all or some of these holders. Thus, the tool TL used for machining the workpiece W is selected by rotating the turrets T1, T2. The tool TL can be replaced for each holder. As the tool TL, not only a tool bit that performs cutting on a workpiece W, but also a rotating tool such as a drill or an end mill may be used. The turrets T1, T2 can be moved in the X direction and the Z direction by drivers not shown in the drawings.

In the lathe M, the first processor 220A including the main spindle H1 and the turret T1 constitutes a first element E1A, and the second processor 220B including the main spindle H2 and the turret T2 constitutes a second element E2A. The first element E1A and the second element E2A are arranged side by side in the X direction. The first element E1A is arranged on the left side in the X direction, and the second element E2A is arranged on the right side in the X direction. In the operating apparatus 100 mentioned above, the reference signs of the main spindles H1, H2 and the turrets T1, T2 are shown together on the display 10.

A workpiece W that has been machine processed by the first processor 220A or the second processor 220B is placed on the unloading platform 230. The unloading platform 230 has a placement table 231 on which a machined workpiece W is held. A machined workpiece W is held on the placement table 231. The placement table 231 is configured so as to be able to receive a workpiece W from the loader device G.

The loader device G has two transporters, a first transporter G1 and a second transporter G2. The first transporter G1 and the second transporter G2 have similar configurations. The first transporter G1 is arranged on the left side in the X direction, and the second transporter G2 is arranged on the right side in the X direction. Both the first transporter G1 and the second transporter G2 can transport a workpiece W between the loading platform 210, the first processor 220A, the second processor 220B, and the unloading platform 230. The first transporter G1 and the second transporter G2 each include an X-slider 241, a Z-slider 242, an elevation rod 243, a loader head 244, and two loader chucks 245. The X-slider 241 can be moved in the X direction along a rail 246 extending in the X direction by means of an X-driver not shown in the drawings.

The Z-slider 242 can be moved in the Z direction along a Z guide not shown in the drawings and included in the X-slider 241 by means of a Z-driver not shown in the drawings. The elevation rod 243 can be raised or lowered (can be moved in the Y direction) along an elevation guide not shown in the drawings but included in the Z-slider 242, by means of an elevation driver not shown in the drawings. The loader head 244 is provided at a lower end of the elevation rod 243, and is raised or lowered integrally with the elevation rod 243. The two loader chucks 245 are provided on the loader head 244 and can each grip a workpiece W. The two loader chucks 245 can move to a posture where the workpiece W is gripped and oriented in the -Z direction (a posture where the workpiece W is oriented toward the main spindles H1, H2), and a posture where the workpiece W is oriented downward (-Y direction), for example, by means of a swivel joint and the like.

In the loader device G, the first transporter G1 constitutes a first element E1B, and the second transporter G2 constitutes a second element E2B. The first element E1B is arranged on the left side in the X direction, and the second element E2B is arranged on the right side in the X direction. In the operating apparatus 100 mentioned above, the reference signs of the first transporter G1 and the second transporter G2 of the loader device G are shown together on the display 10.

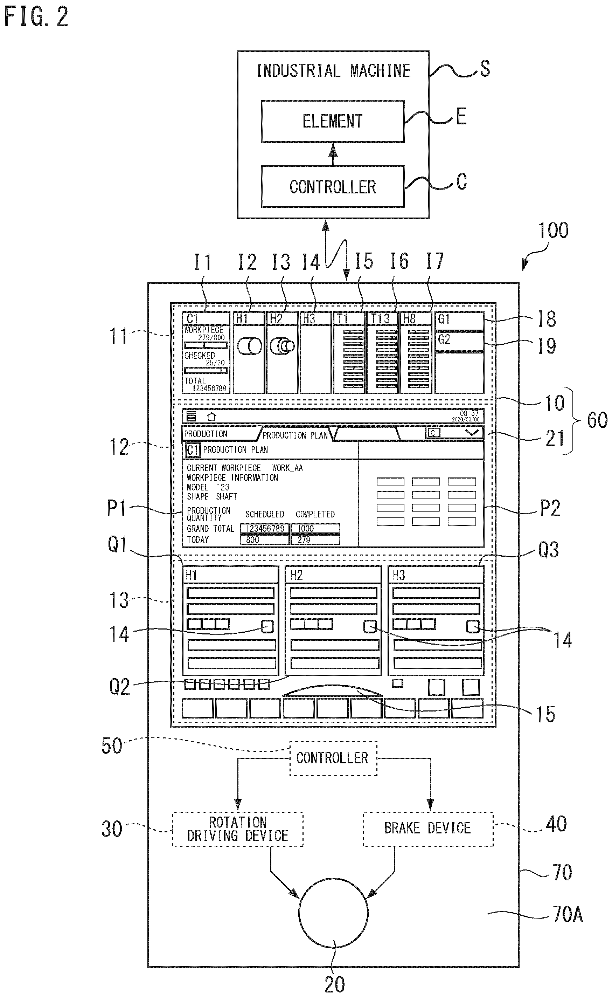

Fig. 2 is a diagram showing an example of the operating apparatus 100 according to the embodiment. The operating apparatus 100 is used to operate the industrial machine S. As shown in Fig. 2, the industrial machine S includes an element E and a controller C that controls the element E. The details of the element E of the industrial machine S will be described later. The operating apparatus 100 is used by the operator to operate the element E. The operating apparatus 100 includes a display 10, a rotary switch 20, a rotation driving device 30, a brake device 40, a controller 50, a setter 60, and a casing 70 that supports or accommodates these.

The display 10 displays images. For example, an information area 11, a setting area 12, and an operation area 13 are preliminarily set on the display 10. The information area 11 is arranged in an upper region of the display 10 in the vertical direction (up-down direction). The setting area 12 is arranged in an intermediate region of the display 10 in the vertical direction. The operation area 13 is arranged in a lower region of the display 10 in the vertical direction. It should be noted that the arrangement of the information area 11, the setting area 12, and the operation area 13 on the display 10 is arbitrary and is not limited to the illustrated example. For example, the operation area 13 may be arranged in an upper region above the information area 11 in the vertical direction, or may be arranged between the information area 11 and the setting area 12.

The information area 11 displays information regarding multiple elements E of the industrial machine S. In the information area 11, information for the operator to constantly check each element is displayed in a panel (window). In the example shown in Fig. 2, the information area 11 displays a panel I1 regarding a counter C1, panels I2, 13, I4 regarding the main spindles H1, H2, H3, panels 15, 16, I7 regarding multiple tools attached to the turrets T1, T2, T3 (for example, the tool TL shown in Fig. 1), and panels 18, I9 regarding the first transporter G1 and the second transporter G2 of the loader device G. When a plurality of panels for counters are displayed in the information area 11, panels for counters C2 ... are displayed alongside the panel I1 for the counter C1 as appropriate.

In the setting area 12, a screen is displayed for the operator to perform settings for the element E of the industrial machine S. In the setting area 12, a plurality of panels P1, P2 are displayed side by side in the lateral direction of the setting area 12. The panels P1, P2 displayed in the setting area 12 can be switched by selecting the panels I1 to I9 in the information area 11. The setting area 12 is not limited to displaying two panels P1, P2, but may display one or three or more panels.

In the operation area 13, the panels Q1, Q2, Q3 are displayed for the operator to operate the element E of the industrial machine S. In the example shown in Fig. 2, the operation area 13 displays the panels Q1, Q2, Q3 for operating the main spindle (for example, the main spindle H1 shown in Fig. 1). When the industrial machine S has a plurality of elements E, the panels Q1, Q2, Q3 are displayed side by side in the lateral direction in the operation area 13 as in the arrangement of the plurality of elements E. Thus, the panels Q1, Q2, Q3 of the operation area 13 and the multiple elements E are arranged in the same order, and therefore, the operator can readily perceive the correspondence between the multiple elements E and the panels Q1, Q2, Q3, thereby limiting operational errors such as operator's errors.

The panel Q1 displays information for operating the main spindle H1 included in the element E or the turret T1 corresponding to main spindle H1. The panel Q2 displays information for operating the main spindle H2 included in the element E or the turret T2 corresponding to main spindle H2. The panel Q3 is displayed when the industrial machine S has a corresponding element E (for example, the main spindle H3 or the turret T3 corresponding to the main spindle H3). The display contents in the panels Q1, Q2, Q3 are set according to the operation of each element, and information necessary for the operation of each element E is displayed. In the operation area 13, a panel regarding information for operating the loader device G may be displayed. The setting area 13 is not limited to displaying three panels Q1, Q2, Q3, but may display one, two, or four or more panels.

A touch pad 21 is formed in an area overlapping the display 10. The display 10 and the touch pad 21 together constitute a touch panel. Using the touch pad 21 (touch panel) enables the operator to easily input information by touching the display portion. The setter 60 is configured with the display 10 and the touch pad 21 (touch panel). In the operating apparatus 100, performing a touch-input on any of the panels Q1, Q2, or Q3 enables the operator to operate the element E that corresponds to the panels Q1, Q2, or Q3. The operator can operate the element E by rotating the rotary switch 20.

The rotary switch 20 is set to, for example, a first mode or a second mode. The first mode is a mode in which the rotation range (or angle range) of the rotary switch 20 is defined. In other words, in the first mode, when the operator rotates the rotary switch 20, the rotary switch 20 can only be rotated within a predetermined rotation range of a single rotation. Examples of the first mode include, an override mode that overrides operation without rewriting the setting program for driving the element E of the industrial machine S, and a jog mode in which the rotary switch 20 is automatically returned to the initial position when rotated. The second mode is a mode in which the rotation range of the rotary switch 20 is not defined. In other words, in the second mode, the operator can rotate the rotary switch 20 beyond one rotation. Examples of the second mode include, a handle mode in which the rotary switch 20 can be rotated beyond one rotation. Specific operations in the first mode and second mode will be described later.

When the operator selects one of panels Q1, Q2, Q3 by touch input, either the first mode or the second mode may be set in advance as the initial setting. Also, a panel for allowing a selection of either the first mode or the second mode may be displayed on the display 10 at the time when the operator selects the panels Q1, Q2, or Q3. In such a case, as the operator selects the first mode or the second mode, the rotation mode of the rotary switch 20 is set to the selected setting.

A mode switching button 14 is displayed on each of the panels Q1, Q2, Q3. The operator can switch the rotation mode of the rotary switch 20 between the first mode and the second mode by performing a touch input on the mode switching button 14. Thus, the display 10 and touch pad 21 described above function as the setter 60 that sets the first mode or the second mode. It should be noted that the implementation of the setter 60 is not limited to using the display 10 and the touch pad 21. For example, the setter 60 may be in a form where a mouse, keyboard, jog dial, or the like is connected to and used with the operating apparatus 100, instead of the touch pad 21.

A gauge panel 15 is displayed in the operation area 13. The gauge panel 15 displays the rotation amount (operation amount) and the rotational position (rotational angle) as figures, performed by the rotary switch 20. The display contents of the gauge panel 15 are switched depending on the panel Q1, Q2, or Q3 selected by the operator. For example, the scale, the rotation range, the color, and the shape of the gauge panel 15 are changed depending on the selected panel Q1, Q2, or Q3. The gauge panel 15 displays, in synchronization with the rotation of the rotary switch 20, an increase/decrease of a bar indicating the amount of rotation and a movement of a mark indicating the rotational position. The gauge panel 15 may also display numerical values such as the rotation amount and the rotational position of the rotary switch 20. The operator can readily understand the rotation amount and the rotational position of the rotary switch 20 by viewing the display of the gauge panel 15.

The rotary switch 20 is rotatably provided in a lower part 70A of the casing 70. The rotary switch 20 is arranged below the display 10. With this arrangement, the display 10 is not hidden by the hand operating the rotary switch 20, and the operator can therefore operate the rotary switch 20 while viewing the display 10. Various buttons such as an emergency stop button may also be provided in the lower part 70A of the casing 70, along with the rotary switch 20.

The rotation driving device 30 is provided inside the casing 70. The rotation driving device 30 applies rotational driving force to the rotary switch 20. As the rotation driving device 30, for example, a servo motor or the like is used. For example, the rotation driving device 30 has a rotation drive shaft connected to the shaft part of the rotary switch 20, and can apply rotational force to the rotary switch 20 in either the clockwise or counterclockwise direction in Fig. 2. When a servo motor is used as the rotation driving device 30, it is possible to hold the rotary switch 20 at a predetermined rotational position (rotational angle).

The brake device 40 is provided inside the casing 70. The brake device 40 applies a load to or restricts the rotation of the rotary switch 20. The brake device 40 is configured to apply a load to or restrict the rotation of the rotary switch 20 by clamping the shaft part of the rotary switch 20 or the rotation drive shaft of the rotation driving device 30, for example. In such a configuration, the load applied to the rotation of the rotary switch 20 can be changed depending on the strength of clamping the shaft part or the rotation drive shaft. By applying a load to the rotation of rotary switch 20, the operator will perceive sensations such as resistance to rotation, difficulty in rotating, and need for greater force while rotating the rotary switch 20.

In the configuration described above, the brake device 40 can restrict the rotation of the rotary switch 20 by firmly clamping the shaft part or the rotation drive shaft. As a result of restricting the rotation of the rotary switch 20, the operator becomes unable to rotate the rotary switch 20 beyond that position. The brake device 40 restricts rotation of the rotary switch 20 from a predetermined rotational position in the clockwise direction while allowing rotation in the counterclockwise direction. Furthermore, the brake device 40 restricts rotation in the counterclockwise direction from another rotational position while allowing rotation in the clockwise direction. As a result, the rotary switch 20 can be rotated within a range from the predetermined rotational position to the another rotational position.

The controller 50 controls the rotation driving device 30 and the brake device 40 in accordance with the first mode or the second mode set by the setter 60 (touch panel 21). In the first mode, the controller 50 controls at least one of the rotation driving device 30 and the brake device 40 so as to restrict the rotation of the rotary switch 20 beyond the rotation range (in other words, so as to allow the rotary switch 20 to rotate within the preliminarily set rotation range). The specific details of how the controller 50 controls the rotation driving device 30 and the brake device 40 will be described later.

The controller 50 controls the display contents displayed on the display 10. The controller 50 changes, for example, the length of a figure or the position of a mark displayed on the gauge panel 15, depending on the rotation amount or the rotational position of the rotary switch 20. Through this control, the rotation amount or the rotational position of the rotary switch 20 is displayed on the gauge panel 15 by varying the length of the figure or the position of the mark. As a result, the operator can readily perceive the rotation amount or the rotational position of the rotary switch 20.

When displaying a plurality of elements E in the information area 11, the controller 50 may cause the information area 11 to display a plurality of panels corresponding to the plurality of elements. As described above, when the operator selects any of the multiple panels, such as panel Q1, by touch input, the controller 50 enables the operation of the element E corresponding to the selected panel, such as Q1, by the rotary switch 20. As described above, when the operator selects any of the multiple panels, such as Q1, the controller 50 may set the rotation mode to the predetermined first mode or second mode. Thus, when there are a plurality of elements E, simply selecting any of the panels such as Q1 sets the first mode or the second mode of predetermined contents, thereby reducing the workload for the operator. For example, the controller 50 can set the rotation mode of the rotary switch 20 to the first mode (for example, override mode) in the initial state where a panel such as Q1 is selected.

The controller 50 also determines whether or not the operator has performed a touch input on the mode switching button 14 displayed on a panel such as Q1. If it is determined that the operator has performed a touch input on the mode switching button 14, the controller 50 switches the rotation mode of the rotary switch 20 from the first mode to the second mode or from the second mode to the first mode.

In those cases where a plurality of first modes (for example, override mode, jog mode) are applicable in the operating apparatus 100, the controller 50 may switch the rotation mode to any one of the plurality of first modes and second modes every time the operator performs a touch input on the mode switching button 14, or may display a list for prompting to select one of the plurality of first modes and second modes when the operator performs a touch input on the mode switching button 14. As the operator selects one of the plurality of first modes and second modes, the controller 50 switches the rotation mode to one of the plurality of first modes or the second mode selected by the operator. Also in those cases where a plurality of second modes are applicable in the operating apparatus 100, a selection can be made by the operator in a similar manner.

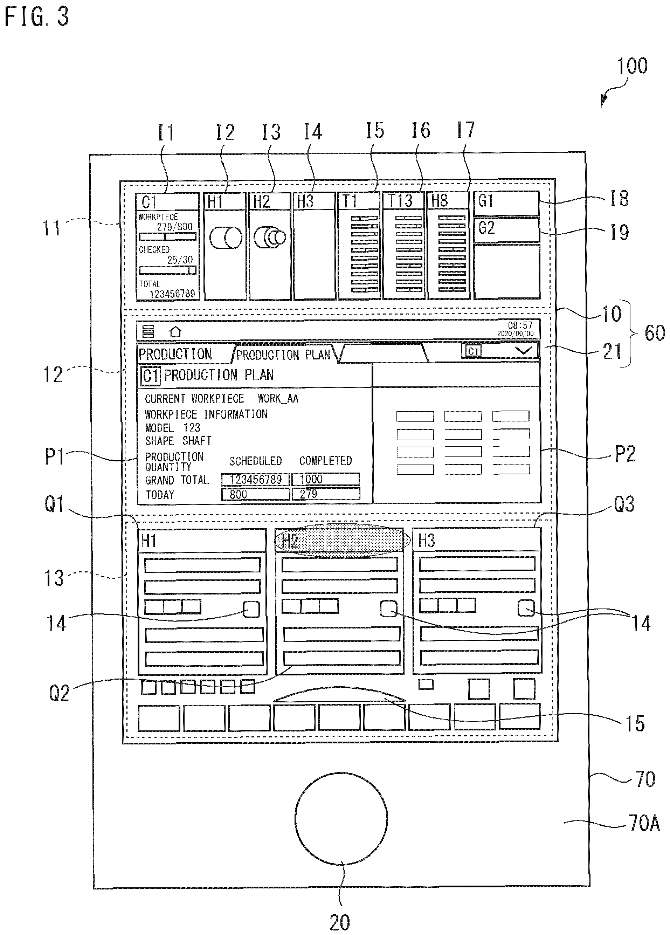

Fig. 3 is a diagram showing a state in which one of the panels Q1, Q2, Q3 displayed on the display 10 is about to be selected. As shown in Fig. 3, if the operator performs a touch input on a part of the panel Q2 among the panels Q1, Q2, Q3 displayed in the operation area 13 of the display 10, the controller 50 determines the panel Q2 as being selected. Fig. 3 shows a state in which the panel Q2 is being selected, however, the same applies when either the panel Q1 or the panel Q3 is selected. Although Fig. 3 shows an example in which the operator performs a touch input on the upper part of the panel Q2 in the vertical direction, the invention is not limited to this example, and the operator may make a selection by performing a touch input on the center part or the lower part of the panel Q2 in the vertical direction.

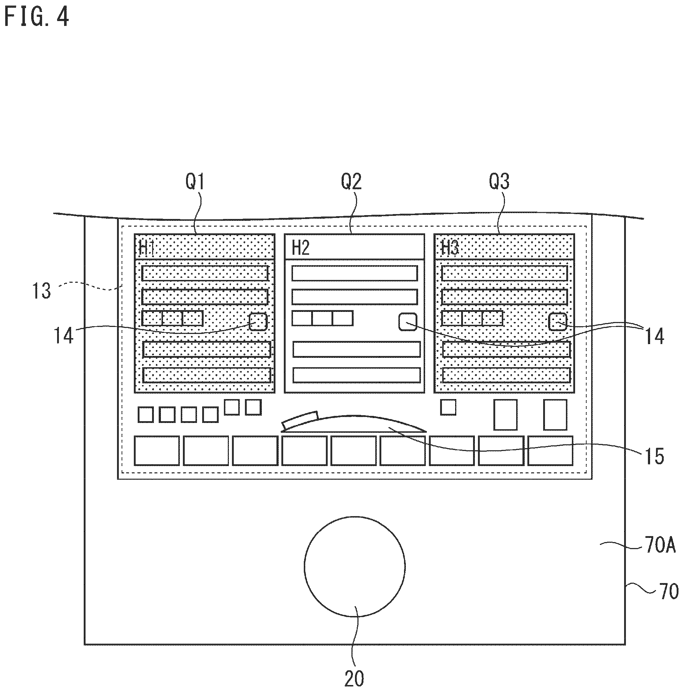

Fig. 4 is a diagram showing a state in which the panel Q2 has been selected. As shown in Fig. 4, the controller 50 displays the unselected panels Q1, Q3 in the operation area 13 in a shaded or blurred manner. This manner of display allows the operator to readily understand that the panel Q2 has been selected. It should be noted that the controller 50 is not limited to displaying the unselected panels Q1, Q3 in the shaded or blurred manner. For example, the controller 50 may hide the unselected panels Q1, Q3 from the operation area 13 and display the selected panel Q2 in the entire operation area 13.

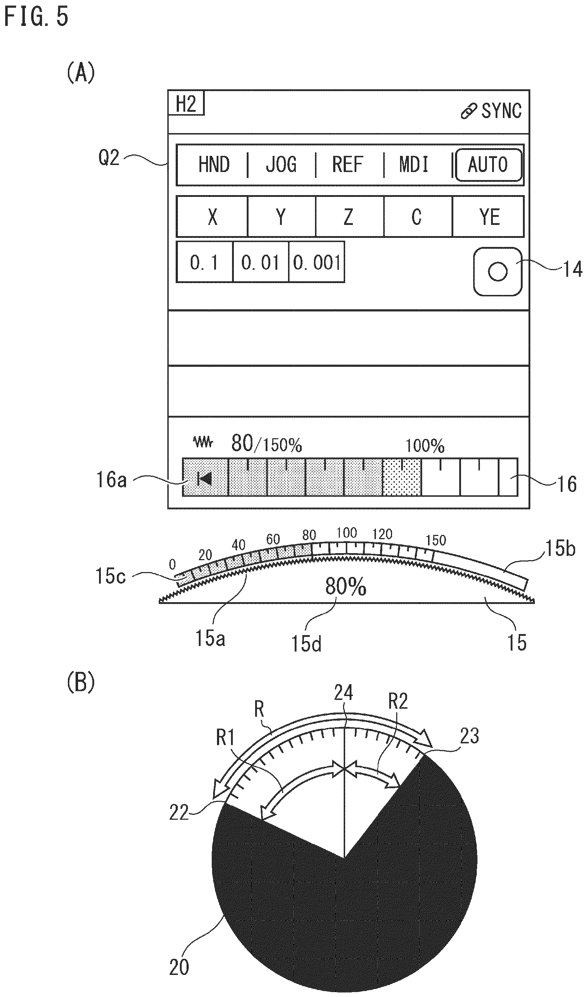

The controller 50 displays the gauge panel 15 corresponding to the panel Q2 as the panel Q2 is selected. The panel Q2 is, for example, preliminarily set to the override mode, which is a first mode, as the initial setting at the time of selection. The controller 50 switches the gauge panel 15 to a display corresponding to the override mode in accordance with the selection of the panel Q2. At this time, as shown in Fig. 5 (A), an "AUTO" button is displayed in the panel Q2 in a highlighted manner. When a panel such as Q1 is selected, the controller 50 may change the state of the gauge panel 15 from the state before the selection. For example, when the panel Q2 is selected, the controller 50 may switch the display to make the size of the entire gauge panel 15 larger than that before the selection.

Fig. 5 shows diagrams illustrating the first mode in which Fig. 5 (A) is a diagram showing the panel Q2 displayed on the display 10, and Fig. 5 (B) is a diagram for describing the rotary switch 20. As shown in Fig. 5 (A), when the panel Q2 is selected, the controller 50 changes the numerical value displayed in the panel Q2 in accordance with the operator's operation on the rotary switch 20. The controller 50 displays in the panel Q2 a level gauge 16 corresponding to the override mode, which is a first mode. This level gauge 16 shows, for example, a scale that indicates which setting value (%) is to be used for override in a preliminarily set operation program. The level gauge 16 shown in Fig. 5 (A) allows override between 0 % and 150 %. Selection buttons for selecting a plurality of drivers that constitute the element E may be displayed in the panel Q2, and the operator may specify and operate the drivers of the element E by making selections through a touch input on the selection buttons.

The controller 50 displays a bar 16a indicating the override setting value (%) in the level gauge 16. The operator can adjust the override setting value (%) by rotating the rotary switch 20. The controller 50 changes the length of the bar 16a and changes the position of the right end of the bar 16a according to the rotational position of the rotary switch 20. The operator can readily perceive the override setting value (%) by checking the length of the bar 16a of the level gauge 16 on the scale.

The gauge panel 15 also includes a notch display 15a that indicates the imparted feels of notches, and a level gauge 15b. The notch display 15a displays a sawtooth shape (knurled shape, zigzag shape) along an arc to indicate that the feel of notches is imparted for the rotation of the rotary switch 20 being performed. The level gauge 15b is provided in an arc shape along the arc-shaped notch display 15a. As with the level gauge 16 of the panel Q2, the level gauge 15b displays a bar 15c within the level gauge 15b along with the scale indicating which setting value (%) is to be used for override.

Displaying the level gauge 15b in an arc shape can effectively convey its correlation with the rotation of the rotary switch 20. The controller 50 displays in an arc-shaped region of the gauge panel 15 a numerical display 15d that indicates the override setting value (%). The operator can accurately grasp the override setting value (%) by viewing the numerical display 15d. It should be noted that the form of the gauge panel 15 described above is an example, and the notch display 15a and the level gauge 15b may be implemented in other display forms.

In the first mode, the controller 50 defines a rotation range R of the rotary switch 20. The controller 50 sets the rotation range R of the rotary switch 20 to allow rotation from one end 22 to the other end 23, as shown in Fig. 5 (B). When the operator attempts to rotate the rotary switch 20 beyond the rotation range R, the controller 50 restricts the rotation of the rotary switch 20 by causing the brake device 40 to operate or using the rotation driving device 30 to apply to the rotary switch 20 a rotational force opposite to the direction in which the operator attempts to rotate it. This control does not allow the rotation of the rotary switch 20 beyond the rotation range R in the first mode, thus preventing the operator from making excessive setting to the element E. It should be noted that in the example shown in Fig. 5, the operator cannot set the override setting value (%) above 150%.

In the first mode, where one end 22 of the rotation range R serves as the origin, when the rotary switch 20 is rotated from the end 22 toward the other end, the controller 50 can control at least one of the rotation driving device 30 and the brake device 40 so as to apply a load to the rotation of the rotary switch 20 within the rotation range R from a midway position 24 of rotation to the other end 23, as shown in Fig. 5 (B). In the example shown in Fig. 5, the midway position 24 is set to a position at which the degree of override (%) is 100%.

When the operator rotates the rotary switch 20 from the end 22 (origin), this control makes the rotation of the rotary switch 20 heavier within a rotation range R2 from the end 22, which is the beginning of the rotation range R, to the midway position 24 than in a rotation range R1 from the midway position 24 to the end 23, which is the end of the rotation range R. In other words, the rotation of the rotary switch 20 becomes heavier in the rotation range R2 near the end of the rotation range R, and this enables the operator to readily perceive that the end of the rotation range R is nearing.

In the example shown in Fig. 5, as the rotation range R, the override setting value (%) is set to be variable between 0 % and 150 %. In the rotation range R1, the override setting value (%) is set in a range between 0 % and 100 %, and in the rotation range R2, the override setting value (%) is set in a range between 100 % and 150 %. That is to say, the midway position 24 is set to a position at which the override setting value (%) is 100 %. In such a case, when the operator rotates the rotary switch 20, if the override setting value (%) is to be set to a value exceeding 100 %, the rotation becomes heavier. Therefore, the operator can easily perceive that the override setting value (%) is about to be set to a value exceeding 100 %.

Thus, by setting a threshold value at the midway position 24 and providing a rotation range R1 in which the rotary switch 20 can be easily rotated and a rotation range R2 in which the rotary switch 20 is heavy in rotation, it is possible to easily make the operator aware that the operation being performed exceeds the threshold value. It should be noted that although the rotation range R is initially set in advance according to the rotation mode, changes can still be made to the rotation range R later to this initial setting.

When the rotary switch 20 is rotated, the controller 50 can control at least one of the rotation driving device 30 and the brake device 40 so as to apply a load to the rotation of the rotary switch 20 every time a predetermined angle is reached. Through this control, notches are felt at predetermined angles when rotating the rotary switch 20, and therefore, the operator can readily perceive the rotation amount of the rotary switch 20.

The feel of a notch is implemented by applying a driving force in the direction opposite to the rotation of the rotary switch 20 by the rotation driving device 30 when the rotary switch 20 is at a predetermined rotational position, and/or by applying a load to the rotation of the rotary switch 20 by means of the brake device 40. In other words, the rotary switch 20 is held at a predetermined rotational position by at least one of the rotation driving device 30 and the brake device 40, however, when the operator further rotates the rotary switch 20, the load on the rotary switch 20 is released, thereby imparting the feel of a notch to the operator. It should be noted that the strength of the load applied at the predetermined rotational position (force to hold the rotary switch 20 at the predetermined rotational position) may be changed depending on the set mode. For example, by increasing the load at the predetermined rotational position, it is possible to give the rotary switch 20 a feel similar to that of a selector switch.

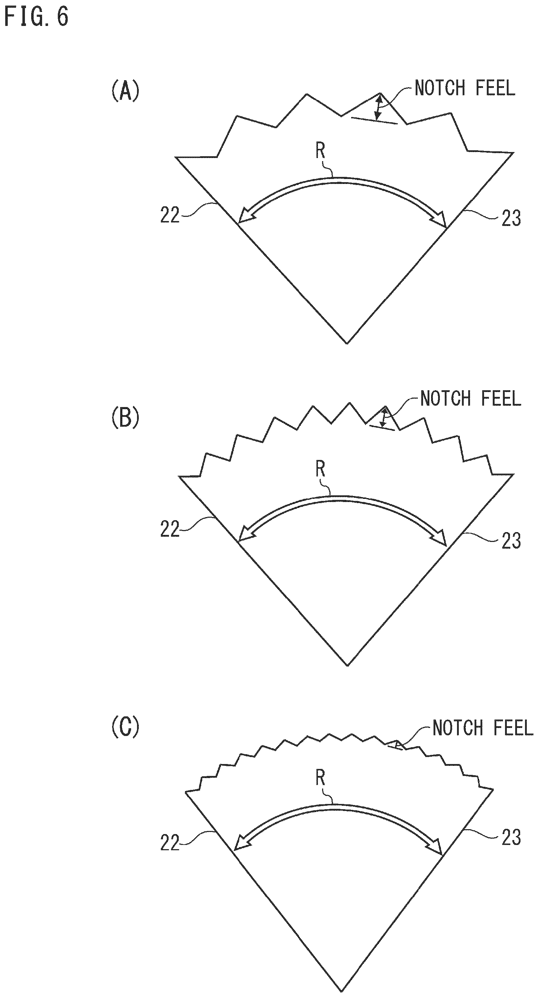

Fig. 6 (A), Fig. 6 (B), and Fig. 6 (C) are diagrams showing examples of feels of notches in the rotary switch 20. As shown in Fig. 6 (A) to Fig. 6 (C), the controller 50 switches the predetermined rotational positions (angular positions) where notches are felt when rotating the rotary switch 20, according to the set mode. For example, as shown in Fig. 6 (A), this setting may be such that the rotation range R is divided into 5 parts and 4 notches are to be felt as the rotary switch 20 rotates from one end 22 to the other end 23. In this example, by increasing the load on (holding) the rotary switch 20 at each rotational position, the operator experiences a feel similar to that of a five-stage selector switch. By dividing the rotation range R into 2 parts and holding the rotary switch 20 at one end 22 and at the other end 23, it is possible to impart the operator a feel similar to that of an ON/OFF switch.

Moreover, the setting may be such that the rotation range R is divided into 10 parts and 9 notches are to be felt as the rotary switch 20 rotates from one end 22 to the other end 23 as shown in Fig. 6 (B), or such that the rotation range R is divided into 15 parts and 14 notches are to be felt as the rotary switch 20 rotates from one end 22 to the other end 23, as shown in Fig. 6 (C). The rotation range R of the rotary switch 20 is shown as being the same in Fig. 6 (A), Fig. 6 (B), and Fig. 6 (C), however, the rotation range R is still set individually depending on the mode as mentioned above. Moreover, the operator can change the initially set notch feel. Furthermore, the controller 50 may give the same notch feel throughout the rotation range R, or may also make the notch feel stronger or weaker in some ranges within the rotation range R.

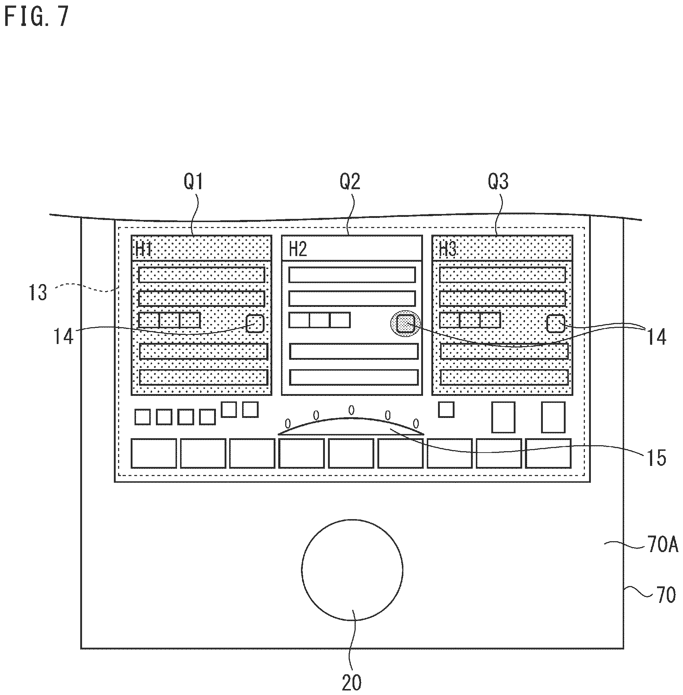

Fig. 7 is a diagram showing a state in which the second mode is set. As shown in Fig. 7, when the operator performs a touch input on the mode switching button 14 in the panel Q2 from the state of the first mode, the controller 50 switches the rotation mode of the rotary switch 20 from the first mode to the second mode. Thus, the operator can easily change from the first mode to the second mode by pressing the mode switching button 14. The controller 50 switches the gauge panel 15 to a display corresponding to the override mode in accordance with the selection of the panel Q2. At this time, in Fig. 5 (A), an "AUTO" button is displayed in the panel Q2 in a highlighted manner.

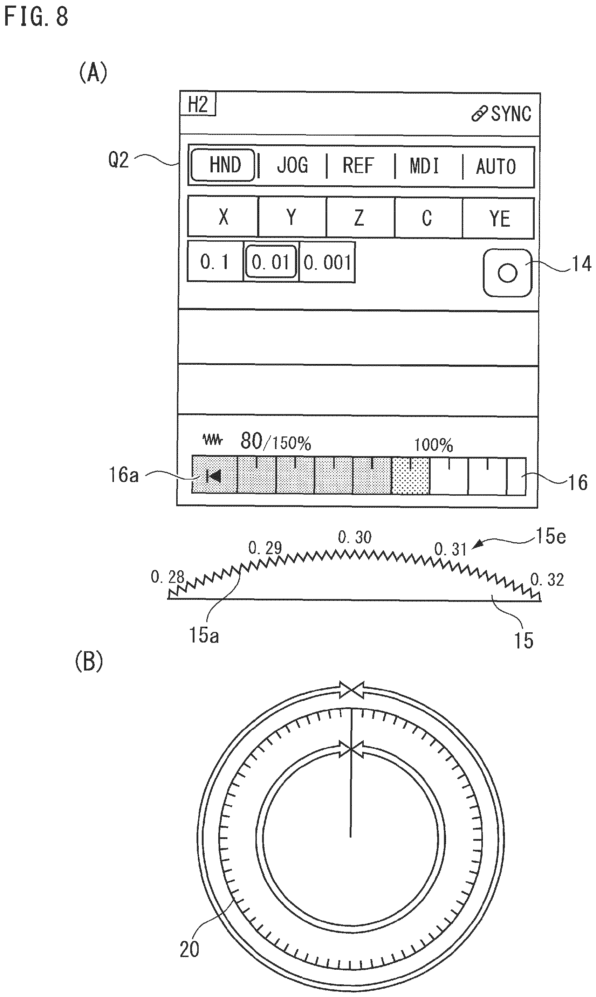

Fig. 8 (A) is a diagram showing the panel Q2 displayed on display 10 in the second mode, and Fig. 8 (B) is a diagram for describing the rotary switch 20 in the second mode. In the second mode, the controller 50 sets the handle mode in which the rotation range R of the rotary switch 20 is not defined. That is to say, the controller 50 performs control so that the rotary switch 20 can be rotated more than one rotation in both the clockwise and counterclockwise directions. The handle mode may be, for example, a mode in which the driver of the element E is driven by rotating the rotary switch 20, or a mode in which the speed of the driver of the element E is set by rotation of the rotary switch 20.

As shown in Fig. 8 (A), the controller 50 switches the gauge panel 15 to a display corresponding to the second mode (handle mode) in accordance with the second mode. At this time, as shown in Fig. 8 (A), an "HND" button is displayed in the panel Q2 in a highlighted manner. When the feed speed is set to "0.01", the "0.01" button is highlighted and displayed. The controller 50 displays the gauge panel 15 corresponding to the second mode on the display 10. When the feel of notches is imparted to the rotation of the rotary switch 20 in the second mode, the notch display 15a is displayed on the gauge panel 15 to indicate that the feel of notches is being imparted. The notch display 15a is displayed in a saw-toothed shape (knurled shape, zigzag shape) along an arc.

In the present embodiment, the second mode is preliminarily set to provide greater notch feels than the first mode (override mode). As a result, the notch display 15a shown in Fig. 8 (A) has a larger sawtooth shape than that on the notch display 15a in the first mode described above (see Fig. 5 (A)). Thus, by changing the sawtooth shape of the notch display 15a in each mode, the magnitude of the notch feel is visually displayed, and the operator can easily discern the notch feel obtained when rotating the rotary switch 20. The gauge panel 15 displays coordinate information 15e of the selected axis. The coordinate information 15e is displayed in the same decimal point unit as the set feed speed "0.01". In the coordinate information 15e, the current coordinate value is displayed in the center, smaller numerical values are displayed in order from the current coordinate value on the left side, and larger numerical values are displayed in order from the current coordinate value on the right side. In the example shown in Fig. 8 (A), for example, the current coordinate value of the selected X-axis "0.30" is displayed, "0.29" and "0.28" are displayed side by side on the left side, and "0.31" and "0.32" are displayed side by side on the right side.

As shown in Fig. 8 (B), when the rotary switch 20 is rotated in the second mode, the controller 50 can control at least one of the rotation driving device 30 and the brake device 40 so as to apply a load to the rotation of the rotary switch 20 every time a predetermined angle is reached. Through this control, notches are felt at predetermined angles when rotating the rotary switch 20, and therefore, the operator can readily perceive the rotation amount of the rotary switch 20. For example, the second mode has a setting such that one rotation of the rotary switch 20 is divided into 100 parts and 100 notches are to be felt as the rotary switch 20 completes one rotation. When the rotary switch 20 is rotated, the current coordinate value is displayed in the center. For example, when the rotary switch 20 is rotated counterclockwise, the current coordinate value "0.29" of the X axis is displayed in the center. At this time, "0.28" and "0.27" are displayed side by side on the left side of "0.29", and "0.30" and "0.31" are displayed side by side on the right side. Similarly, also when the rotary switch 20 is rotated clockwise, the current coordinate value is displayed in the center, and the left and right numerical values are displayed in accordance with the coordinate value in the center.

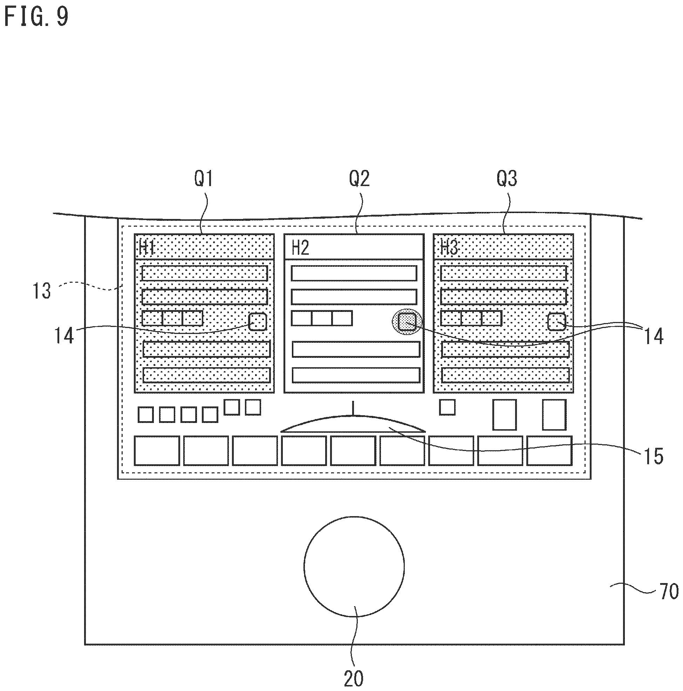

Fig. 9 is a diagram showing a state in which another first mode is set. As shown in Fig. 9, when the operator performs a touch input on the mode switching button 14 in the panel Q2 from the state of the second mode, the controller 50 switches the rotation mode of the rotary switch 20 from the second mode to the first mode. Thus, the operator can easily change from the second mode to the first mode by pressing the mode switching button 14. For example, in a case where a touch input is performed on the mode switching button 14 after the mode has been sequentially switched from the first mode (override mode) shown in Fig. 5 to the second mode (handle mode) shown in Fig. 8 by a press of the mode switching button 14, the controller 50 can set the mode to a mode different from the override mode described as a first mode, such as a jog mode. It should be noted that the mode switching button 14 is not only used for switching between the first mode and the second mode as described above, but also as a button for selecting any one of multiple modes in the first mode or second mode.

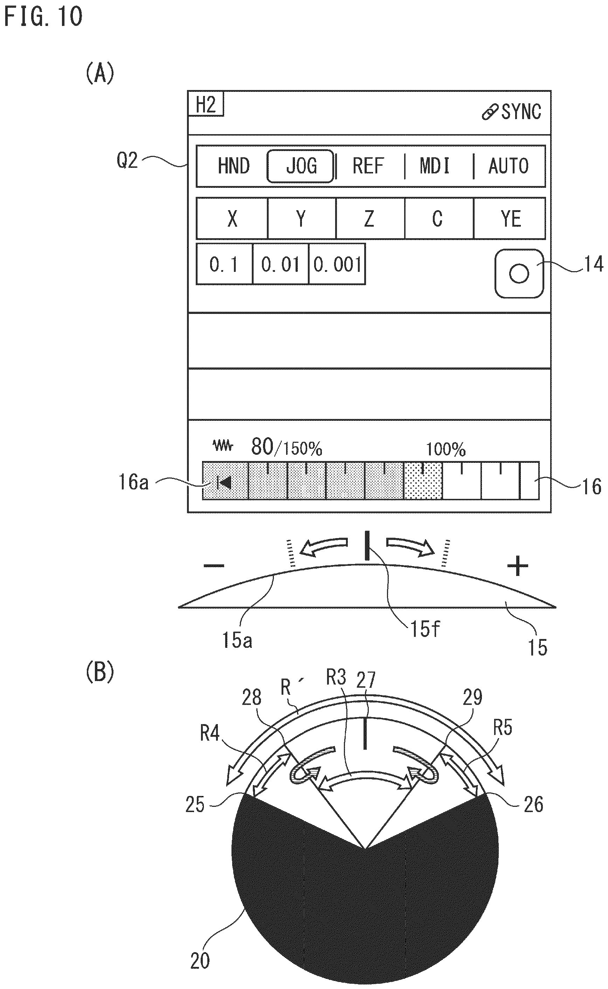

Fig. 10 (A) is a diagram showing the panel Q2 displayed on display 10 in another first mode. Fig. 10 (B) is a diagram for describing the rotary switch 20 in the another first mode. In this first mode, as with the first mode shown in Fig. 5, the controller 50 defines a rotation range R of the rotary switch 20. In order to distinguish it from the first mode (override mode) shown in Fig. 5, the following description refers to it as jog mode. The jog mode may be a mode in which, for example, rotating the rotary switch 20 increases or decreases the speed of the driver of the element E. As shown in Fig. 10 (A), the controller 50 displays in the panel Q2 a level gauge 16 corresponding to the jog mode, which is a first mode. At this time, as shown in Fig. 10 (A), a "JOG" button is displayed in the panel Q2 in a highlighted manner.

The controller 50 displays a gauge panel 15 corresponding to the jog mode. On the gauge panel 15, a bar 15f is arranged in the center as its initial position, a "-" symbol is displayed on the left side of the bar 15f, and a "+" symbol is displayed on the right side of the bar. The symbols "+", "-" displayed on the left and right sides of the bar 15f indicate the movement direction of the axis. In the jog mode, the feel of notches is not imparted, and therefore, the notch display 15a is of a curved arc shape rather than a saw-toothed shape. Therefore, the operator can readily understand that no notch feel is imparted in the jog mode.

In the jog mode, the controller 50 moves the target axis in the "+" direction or the "-" direction as the rotary switch 20 is rotated. For example, rotating the rotary switch 20 clockwise causes the target axis to move in the "+" direction, or rotating the rotary switch 20 counterclockwise causes the target axis to move in the "-" direction. At this time, the controller 50 displays the bar 15f on the gauge panel 15 by shifting it to the "+" side or to the "-" side in accordance with the rotational angle of the rotary switch 20, as shown in Fig. 10 (A). With this display, the operator can readily perceive how much the rotary switch 20 being rotated. In the jog mode, the controller 50 defines a rotation range R of the rotary switch 20. The controller 50 sets the rotation range R' of the rotary switch 20 to allow rotation from one end 25 to the other end 26, as shown in Fig. 10 (B). When the operator attempts to rotate the rotary switch 20 beyond the rotation range R', the controller 50 restricts the rotation of the rotary switch 20 by causing the brake device 40 to operate or using the rotation driving device 30 to apply to the rotary switch 20 a rotational force opposite to the direction in which the operator attempts to rotate it. Moreover, in the another first mode, where a middle portion of the rotation range R' serves as an initial position (origin) 27, when the rotary switch 20 is rotated from the initial position 27, the controller 50 controls the rotation driving device 30 so as to return the rotary switch 20 to the initial position 27. When the rotary switch 20 is not rotated, the bar 15f is arranged at the center of the gauge panel 15 corresponding to the initial position 27, and as described above, the bar 15f is shifted to and displayed on the "+" side or the "-" side as the rotary switch 20 is rotated.

Therefore, in the jog mode, the operator will rotate the rotary switch 20 while feeling the force attempting to return it to the origin 27. When the operator releases the rotary switch 20 after rotating it, the rotary switch 20 returns to the origin 27. This enables to prevent the rotary switch 20 from remaining in the rotated state. When the rotary switch 20 is rotated from the origin 27, the controller 50 controls at least one of the rotation driving device 30 and the brake device 40 so as to apply a load to the rotation of the rotary switch 20 within both a range from a midway position 28 to one end 25 of the rotation range R', and a rotation range R4 from a midway position 29 of rotation to the other end 26 of the rotation range R'.

As shown in Fig. 10 (B), the controller 50 does not apply any load to the rotation of the rotary switch 20 within a rotation range R3, which is a middle portion of the rotation range R'. On the other hand, as mentioned above, when the rotary switch 20 is rotated counterclockwise, the controller 50 controls so as to apply a load to the rotation of the rotary switch 20 within the rotation range R4 from the midway position 28 to the end 25. Moreover, when the rotary switch 20 is rotated clockwise, the controller 50 controls so as to apply a load to the rotation of the rotary switch 20 within the rotation range R5 from the midway position 29 to the end 26. It should be noted that in the rotation range R4 and in the rotation range R5, the same load may be applied to the rotation of the rotary switch 20 or different loads may be applied to the rotation of the rotary switch 20.

In the jog mode, when rotating the rotary switch 20 from the origin 27, the operator can rotate the rotary switch 20 from the origin 27 to the midway position 28 toward the end 25 and from the origin 27 to the midway position 29 toward the end 26 (that is, within the rotation range R3) while feeling the force attempting to return the rotary switch 20 to the origin 27. However, when the operator rotates the rotary switch 20 beyond the midway position 28 towards the end 25 (that is, within the rotation range R4), and when the operator rotates the rotary switch 20 beyond the midway position 29 towards the end 26 (that is, within the rotation range R5), in addition to the force attempting to return the rotary switch 20 to the origin 27, an additional load is applied to the rotation of the rotary switch 20. As a result, the operator feels the rotary switch 20 being heavier in rotation in the rotation ranges R4, R5 than in the rotation range R3. In other words, the rotary switch 20 becomes heavier in rotation in the rotation ranges R4, R5 near the both ends 25, 26 of the rotation range R', and this enables the operator to readily perceive that the end 25 or 26 of the rotation range R' is nearing.

It should be noted that the feel of notches is not imparted in the jog mode as mentioned above, however, as with the first mode (override mode) shown in Fig. 5 and the second mode (handle mode) shown in Fig. 8 described above, the feel of notches may be imparted for the rotation of the rotary switch 20. In the first mode (override mode) shown in Fig. 5 and the second mode (handle mode) shown in Fig. 8 described above, whether or not to impart the feel of notches for the rotation of the rotary switch 20 is arbitrary. In the first mode shown in Fig. 5 and the second mode shown in Fig. 8, the feel of notches may not be imparted for the rotation of the rotary switch 20.

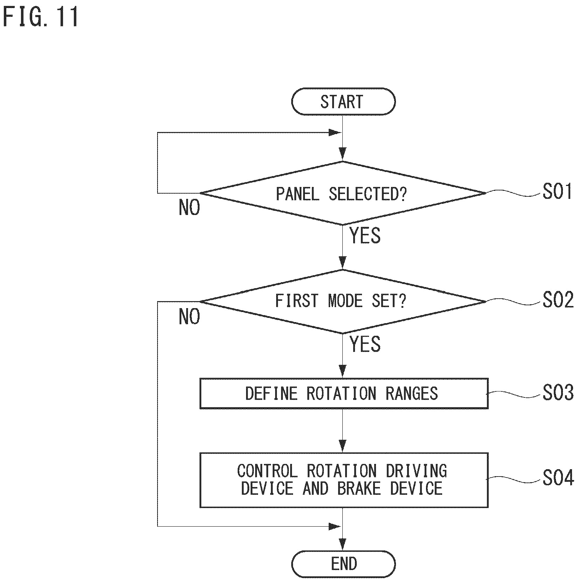

Fig. 11 is a flowchart showing an example of a method for controlling the operating apparatus 100 according to the embodiment. As shown in Fig. 11, the controller 50 determines whether or not a panel such as Q1 has been selected by the operator (Step S01). As described above, a panel such as Q1 is displayed in the operation area 13 on the display 10 of the operating apparatus 100. It should be noted that in the process flow shown in Fig. 11, one or more panels, such as Q1 and the like are displayed in the operation area 13 of the display 10. When the operator performs a touch input on a panel such as Q1, the controller 50 determines that the panel such as Q1 has been selected. If it is determined that no panel such as Q1 has been selected (Step S01: NO), the controller 50 repeats the processing of Step S01.

Subsequently, if it is determined that a panel such as Q1 has been selected (Step S01: YES), the controller 50 determines whether or not a first mode is set (Step S02). If it is determined that a first mode is not set (Step S02: NO), the controller 50 ends the series of processes. In Step S02, the controller 50 determines whether or not the initial setting of the selected panel such as Q1 is a first mode. If a first mode is determined as not being set, that is, if the initial setting is a second mode, the controller 50 does not perform the processing from Step S03 onward in the process flow shown in Fig. 11, and executes the contents of the second mode.

On the other hand, if the first mode is determined as being set (Step S02: YES), the controller 50 defines the rotation ranges R, R' for the rotary switch 20 (Step S03). The controller 50 defines the rotation ranges R, R' for the rotary switch 20 in accordance with the first mode (override mode, jog mode) corresponding to the panel such as Q1. Subsequently, the controller 50 controls the rotation driving device 30 and the brake device 40 (Step S04). In Step S04, the controller 50 controls at least one of the rotation driving device 30 and the brake device 40 so as to restrict the rotation of the rotary switch 20 if the rotation range R or R' is exceeded. After Step S04, in the state where the rotation of the rotary switch 20 is regulated by the rotation ranges R, R', the controller 50 executes the first mode (override mode, jog mode).

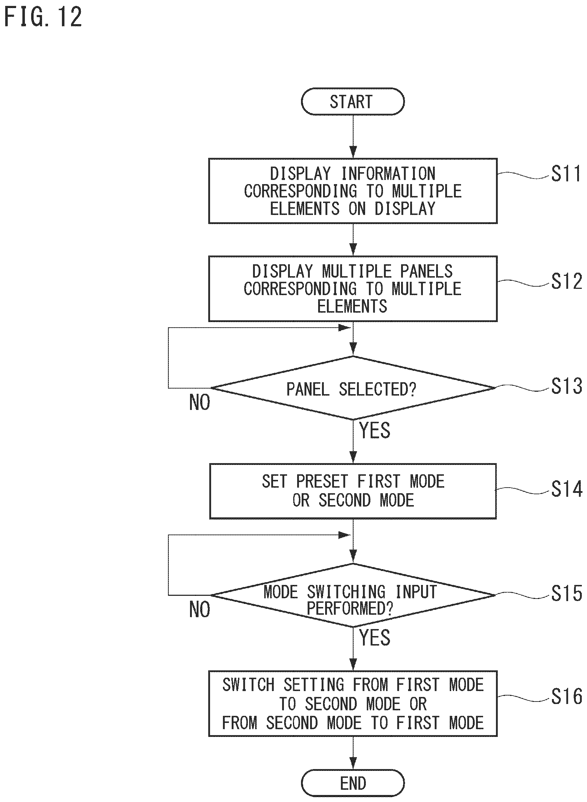

Fig. 12 is a flowchart showing another example of the method for controlling an operating apparatus 100. As shown in Fig. 12, if the operating apparatus 100 allows an operation to be performed for a plurality of elements E, the controller 50 displays information corresponding to the plurality of elements E on the display 10 (Step S11). In Step S11, the controller 50 causes the information area 11 of the display 10 to display a plurality of panels such as I1 as information corresponding to the plurality of elements E. Subsequently, the controller 50 causes the operation area 13 of the display 10 to display a plurality of panels such as Q1 corresponding to the plurality of elements E (Step S12). In Step S12, the controller 50 causes the operation area 13 to display the plurality of panels such as Q1 side by side so as to correspond to the plurality of elements E that can be operated.

Subsequently, the controller 50 determines whether or not a panel such as Q1 has been selected from the plurality of panels such as Q1 (Step S13). When the operator performs a touch input on one of the plurality of panels such as Q1, the controller 50 determines that one of the plurality of panels such as Q1 has been selected. If it is determined that no panel such as Q1 has been selected (Step S13: NO), the controller 50 repeats the processing of Step S13. If it is determined that a panel such as Q1 has been selected (Step S13: YES), the controller 50 sets the rotation mode of the rotary switch 20 to a predetermined first mode or second mode (Step S14). As described above, the rotation mode is set in advance for the panel Q1 and so forth as initial setting. When one of the panels such as Q1 is selected, the controller 50 sets the mode to the predetermined first mode or second mode depending on that panel such as Q1.

Subsequently, the controller 50 determines whether or not there is a mode switching input (Step S15). In Step S15, the controller 50 determines, for example, whether or not the operator has made a touch input on the mode switching button 14 on a panel such as Q1. If it is determined that no mode switching input has been made (Step S15: NO), the controller 50 repeats the processing of Step S14. If it is determined that a mode switching input has been made (Step S15: YES), the controller 50 changes the rotation mode of the rotary switch 20 from the first mode to the second mode, or from the second mode to the first mode (Step S16). For example, if the rotation mode of the rotary switch 20 is the first mode at the time when a touch input is performed on the mode switching button 14, the controller 50 switches the mode from the first mode to the second mode. However, if the rotation mode of the rotary switch 20 is the second mode at the time when a touch input is performed on the mode switching button 14, the controller 50 switches the mode from the second mode to the first mode.

The controller 50 ends the series of processes upon executing Step S16. The controller 50 controls the display of the display 10, the rotation driving device 30, and the brake device 40 in accordance with the first mode or the second mode that has been set.

Thus, according to the operating apparatus 100 and the method for controlling the operating apparatus 100 of the present embodiment, when the first mode is set, the rotation range R of the rotary switch 20 is defined by at least one of the rotation driving device 30 and the brake device 40. Therefore, in the first mode, the operator cannot rotate the rotary switch 20 beyond the rotation range R, thus preventing excessive setting from being performed for the element E. When selecting and operating one of a plurality of elements E, by setting the first mode or the second mode, it is possible to easily realize the rotary switch 20 suitable for each element. Furthermore, by switching the modes, a plurality of elements E can be operated with a single rotary switch 20, thus reducing the space required for arranging switches in the operating apparatus 100. Also, even in a case where some or all of the elements E are replaced, such a case can be dealt with by changing the settings of the first mode or the second mode, thus eliminating the need for component replacement while enhancing versatility.

The embodiment of the present invention has been described above. However, the technical scope of the invention is not limited to the description of the above embodiment. It is also apparent to those skilled in the art that various modifications or improvements can be added to the above embodiment. The technical scope of the present invention also encompasses one or more of such modifications or improvements. One or more of the requirements described in the above embodiment may be omitted in some cases. One or more of the requirements described in the above embodiment may be combined where appropriate. The order of executing processes shown in the present embodiment can be realized in an arbitrary order unless an output of the previous processing is used in the following processing. While operations in the above embodiment have been described with expressions such as "first", "next", and "subsequently" for the sake of convenience, the operations need not always be implemented in that order.

In the embodiment described above, information at the time when the operator rotates the rotary switch 20 is displayed on the gauge panel 15 such as the panel Q1, as changes in numerical values and figures, however, the invention is not limited to this example. For example, if the operating apparatus 100 includes a speaker, numerical values and so forth may be output by voice in addition to what is displayed on the display 10. Moreover, if the operating apparatus 100 includes a speaker, the speaker may output a warning sound or the like at the time when the rotation of the rotary switch 20 approaches the end of the rotation range R in the first mode.

It should be noted that the technical scope of the present invention is not limited to the mode described in the above embodiments. One or more of the requirements described in the above embodiment may be omitted in some cases. One or more of the requirements described in the above embodiment may be combined where appropriate. The contents of Japanese Patent Application No. 2022-008934 and all documents cited in the detailed description of the present invention are incorporated herein by reference to the extent permitted by law.

### Description of Reference Signs

E: Element
E1A, E2A: First element
E1B, E2B: Second element
G: Loader device
M: Lathe
Q1, Q2, Q3: Panel
R: Rotation range
R1, R2, R3, R4, R5: Rotation range
S: Industrial machine
SYS: Machine tool system
10: Touch panel
13: Operation area
14: Mode switching button (button)
15: Gauge panel
20: Rotary switch
22, 23, 25, 26: End part
24, 28, 29: Midway position
27: Origin
30: Rotation driving device
40: Brake device
50: Controller
60: Setter
100: Operating apparatus

## Claims

1. An operating apparatus provided with a rotary switch to drive an element of an industrial machine, the operating apparatus comprising:
a rotation driving device that rotates the rotary switch;
a brake device that applies a load to or restricts rotation of the rotary switch;
a setter that sets a first mode in which a rotation range of the rotary switch is defined, or a second mode in which a rotation range of the rotary switch is not defined; and
a controller that controls the rotation driving device and the brake device in accordance with the first mode or the second mode set by the setter,
wherein the controller, in the first mode, controls at least one of the rotation driving device and the brake device so as to restrict the rotation of the rotary switch beyond the rotation range.

2. The operating apparatus according to claim 1,
wherein, when the rotary switch is rotated, the controller controls at least one of the rotation driving device and the brake device so as to apply a load to the rotation of the rotary switch every time a predetermined angle is reached.

3. The operating apparatus according to claim 1 or 2,
wherein in the first mode, where one end of the rotation range serves as an origin, when the rotary switch is rotated from an origin toward an other end, the controller controls at least one of the rotation driving device and the brake device so as to apply a load to the rotation of the rotary switch within a predetermined rotation range from the midway position of rotation to the other end.

4. The operating apparatus according to claim 1 or 2,
wherein in the first mode, where an intermediate part of the rotation range serves as an origin, when the rotary switch is rotated from the origin, the controller controls the rotation driving device so as to return the rotary switch to the origin.

5. The operating apparatus according to claim 4,
wherein when the rotary switch is rotated from the origin, the controller controls at least one of the rotation driving device and the brake device so as to apply a load to the rotation of the rotary switch within both a predetermined rotation range from the midway position of rotation to one end of the rotation range, and a predetermined rotation range from the midway position of rotation to the other end of the rotation range.

6. The operating apparatus according to any one of claims 1 to 5,
wherein a display that displays a button to switch between the first mode and the second mode is included, and
wherein the setter changes setting from the first mode to the second mode, or from the second mode to the first mode, on the basis of an input made by pressing the button displayed on the display.

7. The operating apparatus according to claim 6,
wherein at least one of the first mode and the second mode is set in a plurality of modes, and
wherein the button can set one of the plurality of first modes or the plurality of second modes.

8. The operating apparatus according to claim 6 or 7,
wherein the display graphically displays a rotation amount or a rotational position of the rotary switch, using a figure, and
wherein the controller causes the display to display a length or a position of the figure while varying it according to the rotation amount or the rotational position of the rotary switch.

9. The operating apparatus according to any one of claims 6 to 8,
wherein when displaying a plurality of the elements on the display, the controller causes the display to display a plurality of panels corresponding to the plurality of elements, and
wherein as one of the plurality of panels is selected, the setter sets the first mode or the second mode that is preliminarily defined for each of the plurality of elements.

10. A method for controlling an operating apparatus provided with a rotary switch to drive an element of an industrial machine, the operating apparatus including a rotation driving device that rotates the rotary switch, and a brake device that applies a load to or restricts rotation of the rotary switch, the method comprising:
setting a first mode in which a rotation range of the rotary switch is defined, or a second mode in which a rotation range of the rotary switch is not defined; and
controlling, when the first mode is set, at least one of the rotation driving device and the brake device so as to restrict the rotation of the rotary switch beyond the rotation range.
